# EUROPÄISCHE PATENTSCHRIFT

(11) **EP 3 362 739 B1**
(45) Veröffentlichungstag und Bekanntmachung des Hinweises auf die Patenterteilung: **28.10.2020**
(21) Anmeldenummer: 16781771.7
(22) Anmeldetag: 13.10.2016
(51) Int. Cl.: F22B 3/02, F22G 1/16, F22B 1/18, F22B 1/16, F01K 25/10

(54) **ERZEUGUNG VON PROZESSDAMPF MITTELS HOCHTEMPERATURWÄRMEPUMPE**
GENERATION OF PROCESS STEAM BY MEANS OF A HIGH-TEMPERATURE HEAT PUMP
PRODUCTION DE VAPEUR INDUSTRIELLE AU MOYEN D'UNE POMPE À CHALEUR HAUTE TEMPÉRATURE

(30) Priorität: 14.10.2015 DE 102015117492
(43) Veröffentlichungstag der Anmeldung: 22.08.2018
(73) Patentinhaber: Mitsubishi Power Europe GmbH, 47059 Duisburg (DE)
(72) Erfinder: BERGINS, Christian, 45711 Datteln (DE); STÖVER, Brian, 45665 Recklinghausen (DE); BOSSER, Sven, 47661 Issum (DE); BUDDENBERG, Torsten, 47447 Moers (DE); WALDBURG, Simon, 58239 Schwerte (DE)
(74) Vertreter: Viering, Jentschura & Partner mbB Patent- und Rechtsanwälte
(86) Internationale Anmeldenummer: PCT/EP2016/074540
(87) Internationale Veröffentlichungsnummer: WO 2017/064163

(56) Entgegenhaltungen:
- WO-A1-2015/068531
- DE-A1-102011 108 260
- US-A1- 2011 252 796
- US-A1- 2014 013 786

## Beschreibung

Die Erfindung richtet sich auf ein Dampferzeugungssystem umfassend eine Hochtemperaturwärmepumpe mit einem Wärmeträgerfluidkreislauf, in welchem eine Wärmeenergie in das Wärmeträgerfluid des Wärmeträgerfluidkreislaufs einkoppelnde Wärmeenergieeinspeisevorrichtung und eine Wärmeenergie aus dem Wärmeträgerfluid des Wärmeträgerfluidkreislaufs auskoppelnde Wärmeenergieausspeisevorrichtung sowie ein Kompressor oder Verdichter und ein Expander oder eine Entspannungsturbine oder eine Drossel oder ein Schraubenexpander angeordnet sind.

Weiterhin richtet sich die Erfindung auf ein Verfahren zur Dampferzeugung, mit einem Dampferzeugungssystem, das eine Hochtemperaturwärmepumpe mit einem Wärmeträgerfluidkreislauf, in welchem eine Wärmeenergie in des Wärmeträgerfluid des Wärmeträgerfluidkreislauf einkoppelnde Wärmeenergieeinspeisevorrichtung und eine Wärmeenergie aus dem Wärmeträgerfluid des Wärmeträgerfluidkreislaufs auskoppelnde Wärmeenergieausspeisevorrichtung sowie ein Kompressor oder Verdichter und ein Expander oder eine Entspannungsturbine oder eine Drossel oder ein Schraubenexpander angeordnet sind, umfasst.

Häufig besteht das Bedürfnis, ortsnah in einem transportierbaren Medium wie einem Fluid, beispielsweise einer Flüssigkeit oder einem Gas, enthaltene Wärmeenergie noch nutzen zu können. Dies scheitert häufig daran, dass in Ortsnähe aber lediglich Medien, insbesondere ein flüssiges oder gasförmiges Fluid, benötigt werden, die ein demgegenüber deutlich höheres Temperaturniveau und damit einen deutlich höheren Wärmeenergieinhalt aufweisen. Um die zur Verfügung stehende (Rest)Wärmeenergie dennoch nutzen zu können, wird häufig durch unmittelbares Aufheizen des Fluids, dessen Restwärme noch genutzt werden soll, erreicht, dass dieses auf das gewünschte Temperaturniveau angehoben wird.

Andererseits sind aber auch elektrisch betriebene Wärmepumpen bekannt, die mit Hilfe eines Wärmeträgermediumkreislaufs einen angeschlossenen Fluidkreislauf erwärmen. So ist es beispielsweise bekannt, mittels einer Wärmepumpe Wasser in den Bereich seiner Siedetemperatur zu erhöhen.

Außerdem besteht das Bedürfnis, gegebenenfalls verschiedene und unterschiedliche Wärmequellen nutzen zu können, um ein Fluid auf die gewünschte hohe Temperatur zu bringen. Insbesondere besteht das Bedürfnis, (Rest)Wärme eines Fernwärmeleitungsnetzes und Abwärme, beispielsweise aus einem industriellen Prozess, nutzen zu können.

Ein gattungsgemäßes Dampferzeugungssystem und ein gattungsgemäßes Verfahren sind aus der WO 2015/068531 A1 bekannt.
Dampferzeugungssysteme sowie Verfahren zur Dampferzeugung mit Dampferzeugungssystemen, die eine Hochtemperaturwärmepumpe mit einem Wärmeträgerfluidkreislauf, in welchem eine Wärmeenergie in das Wärmeträgerfluid des Wärmeträgerfluidkreislaufs einkoppelnde Wärmeenergieeinspeisevorrichtung und eine Wärmeenergie aus dem Wärmeträgerfluid des Wärmeträgerfluidkreislaufs auskoppelnde Wärmeenergieausspeisevorrichtung sowie ein Kompressor oder Verdichter und ein Expander oder eine Entspannungsturbine oder eine Drossel oder ein Schraubenexpander angeordnet sind, sind zudem aus der US 2011/013786 A1, der US 2011/252796 A1 und der DE 10 2011 108260 A1 bekannt.

Der Erfindung liegt die Aufgabe zugrunde, eine Lösung zu schaffen, die es ermöglicht, aus örtlicher Wärme, insbesondere aus Wärme eines Fernwärmeleitungsnetzes und/oder einer Abwärme eines industriellen Prozesses, und zugeführtem elektrischen Strom Dampf zu erzeugen.

Diese Aufgabe wird durch ein Dampferzeugungssystem gemäß Anspruch 1 und ein Verfahren zur Dampferzeugung gemäß Anspruch 9 gelöst.

Zweckmäßige Ausgestaltungen und vorteilhafte Weiterbildungen der Erfindung sind Gegenstand der jeweiligen Unteransprüche.

Bei einem Dampferzeugungssystem der eingangs näher bezeichneten Art wird das Ziel dadurch erreicht, dass in der Wärmeenergieeinspeisevorrichtung aus einem zuströmenden temperierten Fluidstrom ausgekoppelte und an das Wärmeträgerfluid des Wärmeträgerfluidkreislaufs übertragene Wärmeenergie das Wärmeträgerfluid erwärmt und der Kompressor oder Verdichter dieses erwärmte Wärmeträgerfluid vor dessen Eintritt in die Wärmeenergieausspeisevorrichtung auf einen solchen Druck verdichtet, dass dessen in der Wärmeenergieausspeisevorrichtung aus dem Wärmeträgerfluid ausgekoppelte und an die Wärmeenergieausspeisevorrichtung durchströmendes Wasser, insbesondere Speisewasser, übertragene Wärmeenergie das Wasser, insbesondere Speisewasser, verdampft, wobei der Wärmeenergieausspeisevorrichtung in Strömungsrichtung des erzeugten Dampfes mindestens ein den Dampfdruck erhöhender Dampfkompressor nachgeschaltet ist, wobei der Kompressor oder Verdichter des Wärmeträgerfluidkreislaufs, der oder die oder mindestens ein Teil der den Dampfdruck des erzeugten Dampfes erhöhende(n) Kompressor(en) und der Expander des Wärmeträgerfluidkreislaufs auf einem Getriebe angeordnet sind.

Ebenso wird die vorstehende Aufgabe bei einem Verfahren der eingangs näher bezeichneten Art dadurch gelöst, dass in der Wärmeenergieeinspeisevorrichtung aus einem zuströmenden temperierten Fluidstrom Wärmeenergie ausgekoppelt und das Wärmeträgerfluid des Wärmeträgerfluidkreislaufs erwärmend an dieses übertragen wird und dieses erwärmte Wärmeträgerfluid vor dessen Eintritt in die Wärmeenergieausspeisevorrichtung von dem Kompressor oder Verdichter auf einen solchen Druck verdichtet wird, dass der Wärmeenergieinhalt des Wärmeträgerfluids ausreicht, um mit in der Wärmeenergieausspeisevorrichtung aus dem Wärmeträgerfluid ausgekoppelter und an die Wärmeenergieausspeisevorrichtung durchströmendes Wasser, insbesondere Speisewasser, übertragener Wärmeenergie das Wasser, insbesondere Speisewasser, zu verdampfen, wobei der in der Wärmeenergieausspeisevorrichtung erzeugte Dampf mindestens einem den Dampfdruck erhöhenden Dampfkompressor zugeführt wird, der der Wärmeenergieausspeisevorrichtung in Dampfströmungsrichtung nachgeschaltet ist, wobei der Kompressor oder Verdichter des Wärmeträgerfluidkreislaufs, der oder die oder mindestens ein Teil der den Dampfdruck des erzeugten Dampfes erhöhende(n) Kompressor(en) und der Expander des Wärmeträgerfluidkreislaufs von einem Getriebe angetrieben werden.

Durch die Erfindung wird ein Dampferzeugungssystem geschaffen, bereitgestellt und genutzt, mit welchem sich Prozessdampf und/oder Heizdampf, insbesondere zur Nutzung bei industriellen Prozessen, mittels eines eine Hochtemperaturwärmepumpe umfassenden Dampferzeugungssystems erzeugen lässt, bei welchem eine in den Wärmeträgerfluidkreislauf der Hochtemperaturwärmepumpe eingebundene und in Form eines Verdampfers/Gaskühlers ausgebildete Wärmeenergieausspeisevorrichtung den Dampf erzeugt. Dieser Wärmeenergieausspeisevorrichtung sind vorzugsweise ein insbesondere elektrisch betriebener Überhitzer und/oder mindestens ein Dampfkompressor in Strömungsrichtung des erzeugten Dampfes nachgeschaltet. Im Unterschied zu konventionellen Dampferzeugungssystemen, die fossilen Brennstoff oder elektrischen Strom nutzen, können das erfindungsgemäße Dampferzeugungssystem und das erfindungsgemäße Verfahren zur Dampferzeugung verschiedene Energiequellen wie elektrischen Strom, örtlich vorhandene Wärme, Wärme aus einem Fernwärmenetz oder Abwärme, beispielsweise von einem industriellen Prozess, nutzen. Die verwendete Hochtemperaturwärmepumpe hebt die eingangsseitig über die Wärmeenergie in den Wärmeträgerfluidkreislauf einkoppelnde Wärmeenergieeinspeisevorrichtung bereitgestellte Wärmeenergie oder Wärmequellentemperatur auf eine für eine Niedrigdruckdampfproduktion in einem Verdampfer (Wärmeenergieausspeisevorrichtung) geeignete Temperatur. Das Arbeitsmedium oder Wärmeträgerfluid des Wärmeträgerfluidkreislaufes der Hochtemperaturwärmepumpe wird vorzugsweise von CO₂ gebildet, kann aber auch Ammoniak (NH₃) sein. Nach der Bildung des Niedrigdruckdampfes im Verdampfer wird dieser mittels der vorgesehenen elektrischen Überhitzung, insbesondere aber mittels des mindestens einen vorgesehenen Dampfkompressors auf den gewünschten Dampfdruck komprimiert. Dies erfolgt vorzugsweise im Rahmen einer mehrstufigen Kompression des Dampfes mit Zwischenkühlung, vorzugsweise Einspritzkühlung, so dass sichergestellt ist, dass der komprimierte Dampf die gewünschte Temperatur aufweist. Dies ist insbesondere dann wichtig, wenn der Dampf als Prozessdampf anschließend in einem industriellen Prozess Verwendung finden soll.
Erfindungsgemäß sind der Kompressor des Wärmeträgerfluidkreislaufs und der oder die oder mindestens ein Teil der den Dampfdruck des erzeugten Dampfes erhöhende(n) Kompressor(en) und der Expander des Wärmeträgerfluidkreislaufs auf einem Getriebe angeordnet. Vorteilhaft ist es, dieses Getriebe als Bull-Gear-Getriebe auszubilden, weshalb die Erfindung in Ausgestaltung weiterhin vorsieht, dass das Getriebe als Bull-Gear-Getriebe ausgebildet ist und vorzugsweise von einem einzigen Motor angetrieben wird. Durch die erfindungsgemäße Anordnung der verschiedenen Kompressoren und des Expanders auf einem Getriebe, ist es möglich, eine kleinbauende Einheit für den Antrieb dieser Elemente vorzusehen. Diese Einheit kann dann zudem von lediglich einem Motor angetrieben sein. Wenn alle Antriebsräder, die jeweils einen Kompressor antreiben oder von dem Expander angetrieben werden, um ein Sonnenrad - etwa analog zu einem Planetengetriebe - angeordnet sind, wie dies bei einem Bull-Gear-Getriebe der Fall ist, können damit die unterschiedlichen, jeweils an einem Antriebsrad angeordneten oder einem Antriebsrad zugeordneten Elemente oder Komponenten (der Kompressor des Wärmeträgerfluidkreislaufs, der oder die den Dampfdruck des erzeugten Dampfes erhöhende(n) Kompressor(en) und der Expander des Wärmeträgerfluidkreislaufs) mit unterschiedlichen Drehzahlen angetrieben oder betrieben werden, obgleich sie dann gegebenenfalls dennoch lediglich an einen Motor gekoppelt sind oder sein können.

Um den erzeugten Dampf für eine Verwendung als Prozessdampf vorteilhaft ausbilden zu können, sieht die Erfindung in Weiterbildung vor, dass der Wärmeenergieausspeisevorrichtung in Strömungsrichtung des erzeugten Dampfes ein, insbesondere elektrisch betriebener Überhitzer, nachgeschaltet ist.

Hierbei ist auch eine Kombination von Dampfkompressor und Überhitzer möglich, so dass die Erfindung weiterhin auch vorsieht, dass der Überhitzer in Strömungsrichtung des erzeugten Dampfes dem mindestens einen Dampfkompressor nachgeschaltet ist.

Von Vorteil ist es, den Dampfkompressor mehrstufig, insbesondere mit Zwischenkühlung mittels Wasserinjektion auszubilden. Die Erfindung zeichnet sich in weiterer Ausgestaltung daher auch dadurch aus, dass der mindestens eine Dampfkompressor eine mehrstufige Kompression des Dampfes, insbesondere mit Zwischenkühlung, vorzugsweise mit Einspritzkühlung, aufweist.

Das bevorzugte Wärmeträgerfluid im Wärmeträgerfluidkreislauf ist Kohlendioxid (CO₂), wobei aber auch Ammoniak (NH₃) Verwendung findet, weshalb sich die Erfindung auch dadurch auszeichnet, dass das Wärmeträgerfluid Kohlendioxid (CO₂) oder Ammoniak (NH₃) ist.

Um die notwendigen Wärmeeinkopplungen und Wärmeauskopplungen günstig realisieren zu können, ist es zweckmäßig, die Wärmeenergieausspeisevorrichtung und die Wärmeenergieeinspeisevorrichtung als Wärmetauscher auszubilden. Die Erfindung sieht daher weiterhin vor, dass die Wärmeenergieeinspeisevorrichtung als Wärmetauscher, insbesondere als flüssig/Gas- Wärmetauscher, und/oder die Wärmeenergieausspeisevorrichtung als Wärmetauscher, insbesondere als Verdampfer/Gaskühler, ausgebildet sind.

Um wie erfindungsgemäß vorgesehen Dampf erzeugen zu können, ist es gemäß Ausgestaltung des erfindungsgemäßen Verfahrens von Vorteil, wenn das Wärmeträgerfluid Kohlendioxid (CO₂) ist und vor seinem Eintritt in die Wärmeenergieausspeisevorrichtung auf einen Druck von ≥ 190 bar und eine Temperatur von ≥ 190 °C verdichtet wird.

Ebenso ist es aber auch in vorteilhafter Weise möglich, dass das Wärmeträgerfluid Ammoniak (NH₃) ist und vor seinem Eintritt in die Wärmeenergieausspeisevorrichtung auf einen Druck von ≥ 80 bar und eine Temperatur von ≥ 160 °C verdichtet wird, was die Erfindung in Ausgestaltung des Verfahrens ebenfalls vorsieht.

Von Vorteil ist es in weiterer Ausgestaltung der Erfindung, wenn der erzeugte Dampf auf das für seine Verwendung als Prozessdampf notwendige Druck- und Temperaturniveau gebracht wird. Das erfindungsgemäße Verfahren zeichnet sich daher weiterhin dadurch aus, dass der in der Wärmeenergieausspeisevorrichtung erzeugte Dampf einem, insbesondere elektrisch betriebenen, Überhitzer zugeführt wird, der der Wärmeenergieausspeisevorrichtung in Dampfströmungsrichtung nachgeschaltet ist.

Schließlich ist es von Vorteil, das gewünschte Prozessdampf-Druck- und Temperaturniveau abhängig von dem gewünschten Niveau mit unterschiedlichen Vorrichtungen zu realisieren. Die Erfindung sieht daher schließlich auch vor, dass der in der Wärmeenergieausspeisevorrichtung erzeugte Dampf in dem Überhitzer auf einen Druck zwischen 1 und 5 bar gebracht wird und/oder dass der in der Wärmeenergieausspeisevorrichtung erzeugte Dampf in dem oder den den Dampfdruck erhöhenden Dampfkompressor(en) auf einen Druck zwischen 2 und 20 bar gebracht wird.

Die Erfindung ist nachstehend anhand einer Zeichnung beispielhaft näher erläutert. Diese zeigt in
- Fig. 1: in schematischer Verfahrensdarstellung ein erstes Ausführungsbeispiel eines erfindungsgemäßen Dampferzeugungssystems mit CO₂ als Wärmeträgerfluid,
- Fig. 2: in schematischer Verfahrensdarstellung ein zweites Ausführungsbeispiel eines erfindungsgemäßen Dampferzeugungssystems mit CO₂ als Wärmeträgerfluid,
- Fig. 3: den COP-Verlauf verschiedener Dampfparameter bei Anwendung des erfindungsgemäßen Verfahrens zur Dampferzeugung,
- Fig. 4: die Ausführungsform nach Fig. 1 mit konkret zur Anwendung gelangenden Verfahrensparametern,
- Fig. 5: in schematischer Verfahrensdarstellung ein drittes Ausführungsbeispiel eines erfindungsgemäßen Dampferzeugungssystems mit CO₂ als Wärmeträgerfluid,
- Fig. 6: in schematischer Verfahrensdarstellung ein viertes Ausführungsbeispiel eines erfindungsgemäßen Dampferzeugungssystems mit CO₂ als Wärmeträgerfluid,
- Fig. 7: in schematischer Darstellung die Integration eines Bull-Gear-Getriebes in ein Dampferzeugungssystem mit CO₂ als Wärmeträgerfluid,
- Fig. 8: in schematischer Darstellung die Anwendung des erfindungsgemäßen Dampferzeugungssystems in einem fünften Ausführungsbeispiel mit CO₂ als Wärmeträgerfluid und in
- Fig. 9: in schematischer Darstellung die Anwendung des erfindungsgemäßen Dampferzeugungssystems in einem sechsten Ausführungsbeispiel mit Ammoniak als Wärmeträgerfluid.

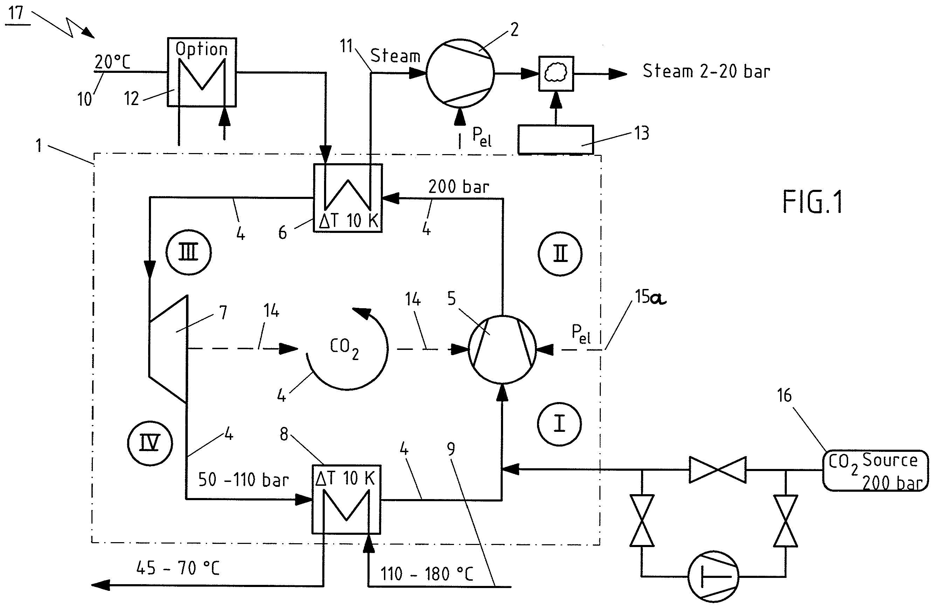

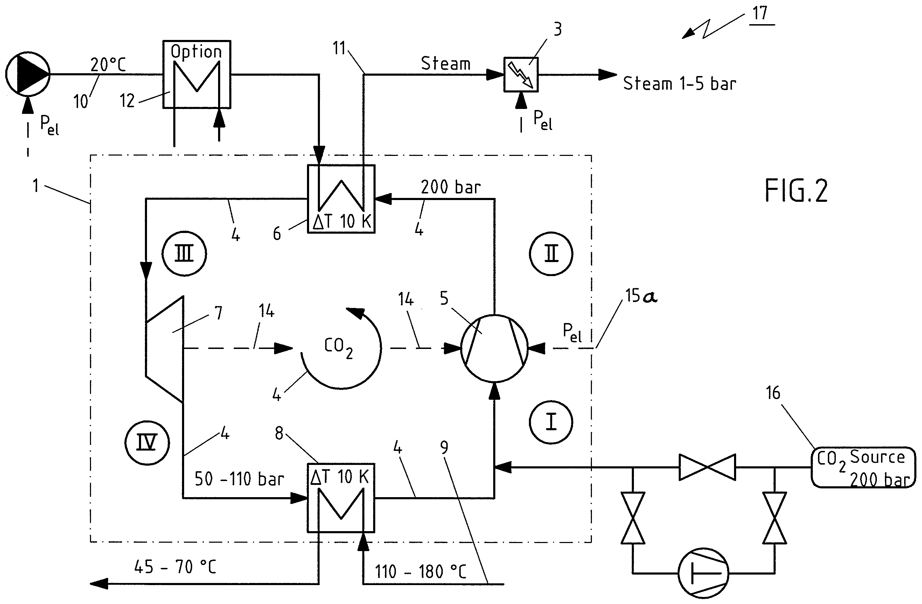

Kernstück des insgesamt mit 17 bezeichneten Dampferzeugssystems und des Verfahrens zur Dampferzeugung ist die Hochtemperaturwärmepumpe 1, die je nach Ausführungsbeispiel CO₂ oder NH₃ als Arbeitsmedium und Wärmeträgerfluid nutzt. Für die Erzeugung von verdichtetem Dampf ist bei der Ausführungsform nach der Fig. 1 ein Dampfkompressor 2 und bei der Ausführungsform nach der Fig. 2 ein Überhitzer 3 wesentlicher Bestandteil des Dampferzeugungssystems für die Erzeugung eines verdichteten Dampfes höheren Druckes. Im Vergleich zu üblichen Wärmeträgerfluiden weist CO₂ einen geringeren Einfluss auf die Umwelt auf.

Im Vergleich zu konventionellen Wärmepumpen, die auf der warmen Seite Temperaturen von bis zu 100 °C und auf der kalten Seite Temperaturen von maximal 30 °C verarbeiten, können mit der hier verwendeten Hochtemperaturwärmepumpe 1 auf der heißen Seite Temperaturen von über 190 °C, vorzugsweise von über 220 °C, und bis zu 260 °C erzeugt werden. Auf der kalten Seite können mit der Hochtemperaturpumpe 1 Eingangstemperaturen im Bereich von 110 °C bis 180 °C verarbeitet werden.

Die Hochtemperaturwärmepumpe 1 weist einen Wärmeträgerfluidkreislauf 4 auf, in welchem bei der Verwendung von CO₂ als Wärmeträgerfluid in Strömungsrichtung des Wärmeträgerfluids nacheinander geschaltet ein Kompressor 5, eine Wärmeenergieausspeisevorrichtung 6, eine Entspannungsturbine oder ein Expander 7 und eine Wärmeenergieeinspeisevorrichtung 8 angeordnet sind.

Beim Übergang vom Abschnitt IV zum Abschnitt I des Wärmeträgerfluidkreislaufes 4 wird in der dort in den Wärmeträgerfluidkreislauf 4 eingebundenen Wärmeenergieeinspeisevorrichtung 8 ein mit einer Temperatur von 110 °C bis 180 °C zufließender Fluidstrom 9 auf eine Temperatur von 45 °C bis 70 °C gekühlt. Bei dem zufließenden Fluidstrom 9 handelt es sich beispielsweise insbesondere um ein Fernwärmefluid, so dass die Wärmeenergieeinspeisevorrichtung 8 auch als Fernwärmekreuzstromwärmetauscher bezeichnet werden kann. In der Wärmeenergieeinspeisevorrichtung 8 wird die durch die Kühlung des Fluidstroms 9 gewonnene Wärmeenergie an das CO₂ Wärmeträgerfluid des Wärmeträgerfluidkreislaufes 4 übertragen. In Abhängigkeit von der Temperatur des Fluidstromes 9 und der Pinch-Temperatur, beispielsweise 10 K, betragen die mögliche Mindest-CO₂-Temperatur 100 °C (Wärmeträgerfluid) und die maximale CO₂-Temperatur 130 °C (Wärmeträgerfluid). Die Begrenzung auf 130 °C ist durch die Begrenzung der thermischen Kohlendioxideigenschaften des Wärmeträgerfluids nach dem Expansionsschritt (auf 50 - 110 bar) im Abschnitt IV des Wärmeträgerfluidkreislaufes 4 verursacht und bestimmt.

Vom Abschnitt I zum Abschnitt II des Wärmeträgerfluidkreislaufes 4 durchströmt das Wärmeträgerfluid den Kompressor 5 und wird mittels dieses Kompressors 5 auf einen Druck von mehr als 190 bar, im Ausführungsbeispiel nach den Fig. 1 und 2 auf 200 bar, verdichtet. Dies geht einher mit einer entsprechenden Temperaturerhöhung, so dass das CO₂-Wärmeträgerfluid im Abschnitt II des Wärmeträgerfluidkreislaufes 4 eine Temperatur von ≥ 190 °C, im Ausführungsbeispiel bei den 200 bar von 220 °C, aufweist. Um die Verdichtung ausgehend von 50 - 110 bar auf einen Druck von mehr als 190 bar zu erreichen, ist mit dem Kompressor 5 eine mechanische Leistung im Bereich von 0,5 bis 50 MW aufzubringen. Je nach Prozess kann diese teilweise mittels zugeführter elektrischer Energie aufgebracht werden.

In Förderrichtung des CO₂-Wärmeträgerfluids ist im Wärmeträgerfluidkreislauf 4 vom Abschnitt II zum Abschnitt III die Wärmeenergieausspeisevorrichtung 6 angeordnet und in den Wärmeträgerfluidkreislauf 4 eingebunden. Die Wärmeenergieausspeisevorrichtung 6 ist ebenfalls als Kreuzstromwärmetauscher, im Ausführungsbeispiel konkret als Kreuzstromverdampfer, ausgebildet. In der Wärmeenergieausspeisevorrichtung 6 wird zugeführtes Frischwasser, gewünschtenfalls je nach Prozess auch Speisewasser, jedenfalls Wasser 10, zu Sattdampf 11 verdampft. In Strömungsrichtung des Wassers 10 stromaufwärts der Wärmeenergieausspeisevorrichtung 6 wird das im Ausführungsbeispiel als Frischwasser mit einer Temperatur von 20 °C und einem Druck von 1 bar zugeführte Wasser 10 auf einen Dampfdruck oder Sattdampfdruck angehoben und in einem optionalen Wärmetauscher 12, der als Kreuzstromvorwärmer ausgebildet ist, auf die Verdampfungstemperatur vorgewärmt. In der Wärmeenergieausspeisevorrichtung 6 wird das Wasser 10 dann zum Sattdampf 11 verdampft. In der Wärmeenergieausspeisevorrichtung 6 wird die bei dem jeweiligen Druck in dem Wärmeträgerfluid des Wärmeträgerfluidkreislaufes 4 enthaltene Wärmeenergie zumindest teilweise aus dem Wärmeträgerfluid ausgekoppelt und in den zuströmenden Fluidstrom aus Wasser 10 eingekoppelt. Der Kompressor 5 verdichtet also das in der Wärmeenergieeinspeisevorrichtung 8 erwärmte Wärmeträgerfluid des Wärmeträgerfluidkreislaufes 4 vor dessen Eintritt in die Wärmeenergieausspeisevorrichtung 6 auf einen solchen Druck, dass die in der Wärmeenergieausspeisevorrichtung 6 aus dem Wärmeträgerfluid ausgekoppelte und an das Wasser 10 übertragene Wärmeenergie das die Wärmeenergieausspeisevorrichtung 6 durchströmende Wasser 10 verdampft, das Wärmeträgerfluid also die dafür benötigte Temperatur aufweist.

Der in der Wärmeenergieausspeisevorrichtung 6 gebildete Sattdampf 11 wird dann bei der Ausführungsform nach der Fig. 1 dem Dampfkompressor 2 zugeführt und auf einen Druck von 2 - 20 bar verdichtet. Bei dem Dampfkompressor 2 kann es sich um einen einstufigen Kompressor handeln. Vorzugsweise ist der Dampfkompressor 2 aber als mehrstufiger Dampfkompressor 2a, 2b mit Zwischenkühlung mittels Wasserinjektion 13 ausgebildet. In diesem Fall weist der Dampfkompressor 2a, 2b vorzugsweise eine mehrstufige Kompression des Dampfes 11 mit einer Einspritzkühlung (Wasserinjektion 13) auf. Bei der Ausführungsform nach der Fig. 2 wird der in der Wärmeenergieausspeisevorrichtung 6 erzeugte Sattdampf 11 mittels des elektrischen Überhitzers 3 auf einen Dampfdruck von 1 - 5 bar angehoben.

Nach dem Durchströmen der Wärmeenergieausspeisevorrichtung 6 besitzt das Wärmeträgerfluid weiterhin ein hohes Temperatur- und Druckniveau. Um diese Wärmeenergie zurückzugewinnen und wiederum ein geeignetes Temperaturniveau für einen Wärmetransfer oder Wärmeübertrag zu erreichen, wird das Wärmeträgerfluid im Wärmeträgerfluidkreislauf 4 dann vom Abschnitt III zum Abschnitt IV der Entspannungsturbine oder dem Expander 7 zugeführt. Diese CO₂-Entspannungsturbine 7 oder dieser CO₂-Expander wird gleichzeitig genutzt, um den Kompressor 5 anzutreiben, wie durch die gestrichelten Pfeile 14 dargestellt ist. Dies reduziert den Verbrauch an mechanischer Energie oder mechanischer Leistung signifikant, die elektrisch 15 a mittels eines Elektromotors 15, 20 für den Antrieb des Kompressors 5 bereitgestellt werden muss. Die Eigenschaften des Wärmeträgerfluids, hier des CO₂-Wärmeträgerfluids, an der Wärmeenergieeinspeisevorrichtung 8, speziell dessen Temperatur, sind essentiell für die erreichbare Wärmerückführungstemperatur des Wärmeträgerfluids. Bei einer Pinch-Temperatur von 10 K beträgt die minimale Wärmeenergieabgabetemperatur des Wärmeträgerfluids 45 °C bis 70 °C.

Der Unterschied zwischen den beiden Ausführungsformen gemäß Fig. 1 und Fig. 2 besteht in der Ausbildung des Dampfdruckbereiches. Die Variante nach der Fig. 1 mit dem Dampfkompressor 2 findet in der Hauptsache bei gewünschten höheren Dampfdrücken oberhalb von 5 bar Anwendung, wohingegen die Ausführungsform nach der Fig. 2 mit dem Überhitzer 3 hauptsächlich bei Dampfdrücken unterhalb 5 bar Anwendung findet. Aber es ist festzuhalten, dass beide Varianten bei allen Drücken Verwendung finden können, wobei sogar eine Kombination eines Dampfkompressors 2 mit einem in Strömungsrichtung des Dampfes 11 nachgeschalteten Überhitzer 3 möglich ist.

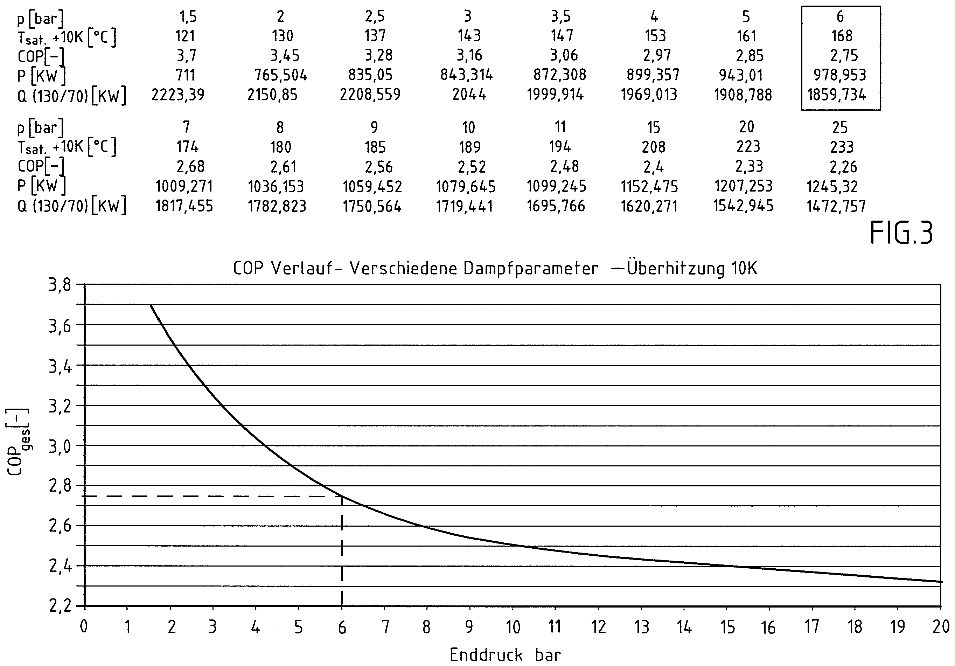

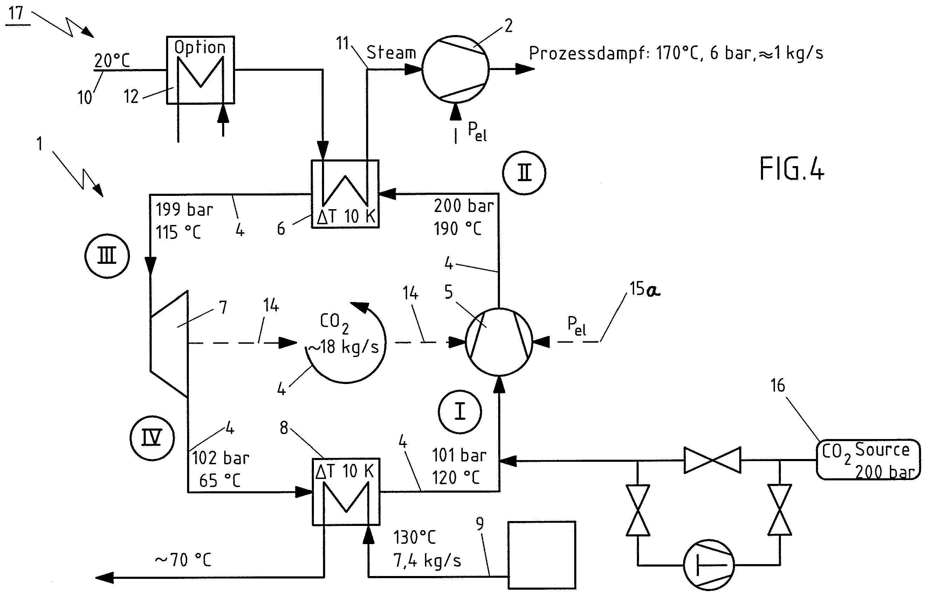

Der Fig. 3 sind die Änderungen der COP-Werte (Coefficient Of Performance oder Leistungszahl) der gesamten Dampferzeugungseinrichtung bzw. des gesamten Dampferzeugungssystems in Bezug auf Variationen in den Dampfparametern für die Ausführungsform nach der Fig. 1 dargestellt. Der COP-Wert gibt das Verhältnis von erzeugter Kälte- bzw. Wärmeleistung zur eingesetzten elektrischen Leistung bei mechanischen Wärmepumpen, wie es die Hochtemperaturwärmepumpe 1 ist, an. Die Fig. 4 zeigt einen mit in der Tabelle der Fig. 3 umrahmten Parametern durchgeführten Betrieb eines erfindungsgemäßen Dampferzeugungssystems 17 gemäß Ausführungsform nach Fig. 1, wobei die der Wärmeenergieeinspeisevorrichtung 8 als Fluidstrom 9 zugeführte Wärmequelle ein (Fernwärme-)Fluid mit einer Temperatur von 130 °C und einem Massenstrom von 7,4 kg/s ist. Hier wird ein Prozessdampf von 6 bar und 170 °C erzeugt. Die Temperaturen und Drücke der jeweiligen Medien sind in der Fig. 4 an den entsprechenden Medien führenden Leitungen angegeben. Es zeigt sich, dass mit einer Stromverlustkennziffer des den Fluidstrom 9 bereitstellenden Kraftwerks von 0,124 ein COP_{Total} von 2,299 erreicht wird.

Der das Kohlendioxid als Wärmeträgerfluid führende Wärmeträgerfluidkreislauf 4 steht mit einer Kohlendioxid-Quelle 16 in Verbindung, über welche dem Wärmeträgerfluidkreislauf 4 CO₂ als Wärmeträgerfluid zuführbar ist.

Die Wärmequelle, d.h. das durch eine Leitung zugeführte Wärmefluid oder der zugeführte Fluidstrom 9 kann grundsätzlich von jeder Art sein. Es kann sich um heißes Industrie(ab)wasser, Fernwärmewasser, industrielle Dampfwärme oder geothermisches Heißwasser oder eine Temperatur von 60 °C bis 90 °C aufweisende Abwärme aus einer Elektrolyse zur Wasserstoff(H₂)-Herstellung aus Wasser handeln. Grundsätzlich kommen alle denkbaren Quellen für die Anwendung bei der Hochtemperaturwärmepumpe 1 in Frage.

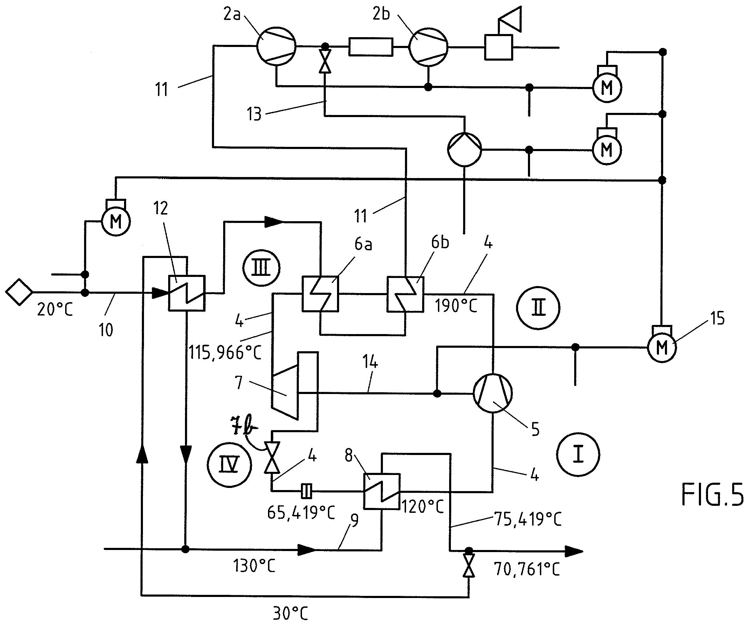

Die Einbindung des in der Fig. 4 dargestellten und insgesamt mit 17 bezeichneten Dampferzeugungssystems in ein Fernwärmenetz zeigt auch die Fig. 5, wobei die gleichen Dampfparameter wie bei dem Dampferzeugungssystem 17 nach Fig. 4 Verwendung finden. Ergänzend ist dargestellt, dass die Wärmeenergieausspeisevorrichtung 6 zwei Wärmetauscher 6a, 6b umfasst. Außerdem ist der Dampfkompressor 2 als mehrere Kompressionsstufen 2a, 2b umfassender Dampfkompressor ausgeführt.

An die Wärmequelle "Fernwärmenetz" ist in diesem Beispiel auch der das zuströmende Wasser 10, insbesondere Speisewasser, erwärmende Wärmetauscher 12 angeschlossen. Dieser kann ebenfalls an jede der vorstehend angegebenen Wärmequellen angeschlossen sein. Weiterhin ist bei diesem Ausführungsbeispiel in Strömungsrichtung des Wärmeträgerfluids des Wärmeträgerfluidkreislaufs 4 stromabwärts des Expanders 7 eine Drossel 7b angeordnet.

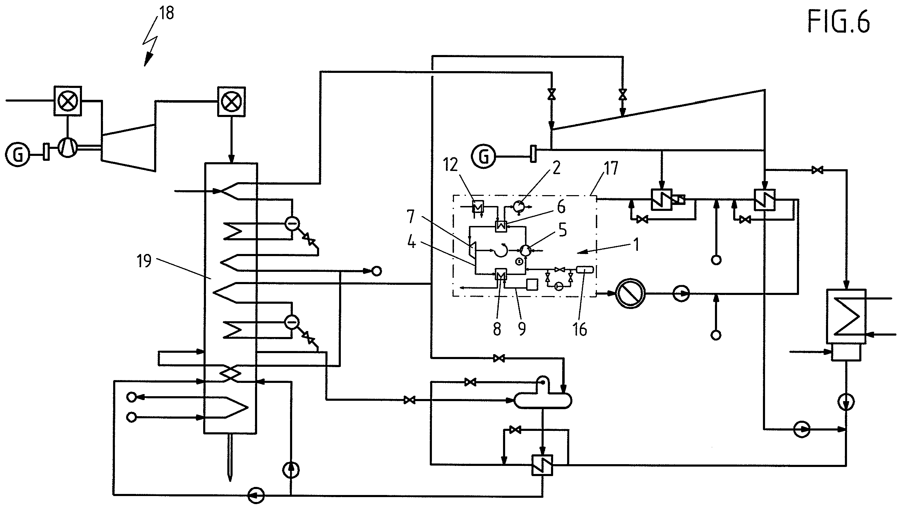

Die Fig. 6 zeigt ein alternatives weiteres Ausführungsbeispiel für die Einbindung des erfindungsgemäßen Dampferzeugungssystems 17 in den Wasser/Dampf-Kreislauf eines von dem Abgas einer Gasturbine 18 gespeisten Abhitzedampferzeugers 19. Auch der Abhitzedampferzeuger 19 nach der Fig. 6 ist im Ausführungsbeispiel in ein Fernwärmenetz eingebunden. Bei dem Ausführungsbeispiel nach der Fig. 6 befindet sich die Gesamtbrennstoffausnutzung auf einem hohen CHP (Combined Heat and Power) Niveau von ≥ 80%, und ist es möglich, Wärme über lange Distanzen von bis zu 100 km zu transportieren, was in üblichen Dampfleitungen aufgrund des dort üblicherweise auftretenden Druckverlustes des Dampfes in dem Röhrensystem nicht möglich ist. In einem solchen üblichen Dampfversorgungsnetz sind unter wirtschaftlicher Betrachtungsweise allenfalls 1 - 2 km maximal möglich.

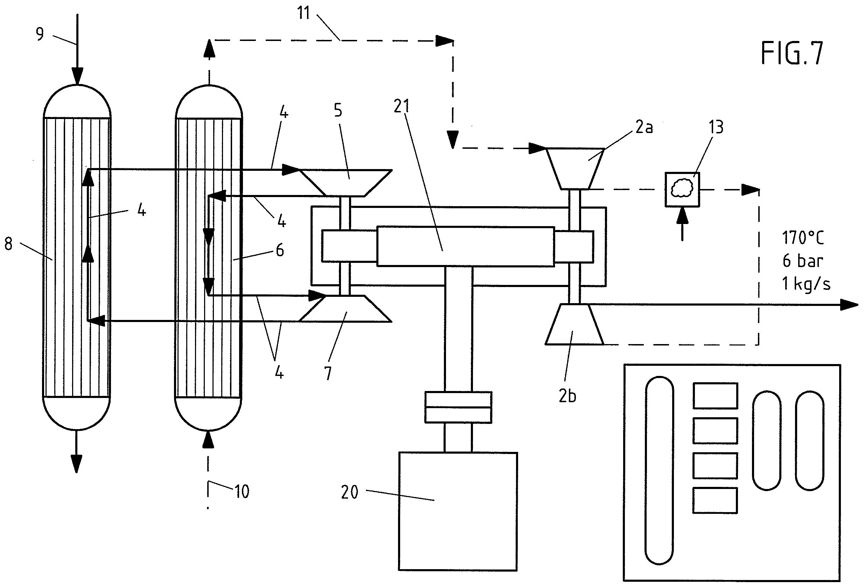

Die Ausführungsform nach der Fig. 7 zeigt, dass sowohl der Kompressor 5 als auch die Entspannungsturbine des Wärmeträgerfluidkreislaufes 4 und die Dampfkompressoren 2a, 2b des mehrstufigen Dampfkompressors 2 von einem einzigen Motor 20 mittels eines Bull-Gear-Getriebes 21 angetrieben werden und der Expander 7 dieses antreiben kann. Bei einem Bull-Gear-Getriebe sind alle Antriebsräder um ein Sonnenrad, analog zu einem Planetengetriebe, angeordnet. Dies erlaubt es, mit den verschiedenen Antriebsrädern unterschiedliche Elemente mit unterschiedlichen Drehzahlen anzutreiben oder zu betreiben, so dass beispielsweise von dem einen Motor 20 der Kompressor 5 sowie die beiden Dampfkompressoren 2a und 2b mit jeweils unterschiedlichen Drehzahlen angetrieben werden können und der Expander 7 Antriebsleistung einbringen kann, wobei alle diese Elemente oder Baugruppen aber dennoch an den lediglich einen Motor 20 gekoppelt sind. Hier kann der antreibende Expander 7 demnach ggf. seine Antriebsleistung einbringen.

Mit der erfindungsgemäßen Dampferzeugung, d.h. der Anwendung des Dampferzeugungssystems 17 und des erfindungsgemäßen Verfahrens zur Dampferzeugung, lassen sich wenig effiziente und/oder kostenintensive, dezentralisierte, kleinere Kraft-Wärme-Kopplungen vermeiden, kann die Verwendung bestehender Großanlagen gestützt werden und/oder kann mehr erneuerbare Energie, insbesondere aus erneuerbaren Energiequellen gewonnener Strom, Verwendung finden, wodurch ein Anstieg im Gasverbrauch bei dezentralen Anwendungen vermieden werden kann. Die Kombination der Hochtemperaturwärmepumpe mit aus erneuerbaren Energiequellen gewonnenem Strom oder aus fossil befeuerten großen Anlagen gewonnenem Strom ist ökonomischer und umweltfreundlicher als der Betrieb von dezentralisierten, brennstoffbasierten Kraft-Wärme-Kopplungsanlagen, die derartige hohe Umweltstandards nicht erfüllen.

In Kombination mit "Power to Heat" mit Heißwasserspeicher, beispielsweise mittels elektrischer Widerstandsbeheizung oder Überschusswärme/Überschusselektrizität gewonnenem Heißwasser von Kraft-Wärme-Kopplungsanlagen, können mit der erfindungsgemäßen Ausgestaltung eines Dampferzeugungssystems größere Mengen an Überschusselektrizität oder Überschussstrom gespeichert werden, beispielsweise mittels dezentralisiert nahe der Hochtemperaturwärmepumpe oder zentralisiert nahe der Wärmeerzeugung des Wärmenetzwerkes angeordnetem Speicher. Auf diese Weise kann elektrischen Netzen Flexibilität zur Verfügung gestellt werden, wobei gleichzeitig die Anforderung von Dampfverbrauchern oder Wärmeverbrauchern erfüllbar bleibt. Die Speichereffizienz ist in diesem Falle nahe bei 100 % in Bezug auf die Dampf- oder Wärmeenergie. Während dieses System bisher für die Wärmespeicherung vorhanden ist, stellt die Verwendung einer solchen Speicherung für die Dampfproduktion eine nützliche Anwendung und einen wertvollen Betriebsgrad eines Kraft-Wärme-Kopplungsnetzes oder eines Kraft-Wärme-Kopplungskraftwerkes dar.

Weiterhin bietet die Möglichkeit, parallel auch noch niedrig temperierte Abwärme beliebiger Quellen nutzen zu können, die Möglichkeit eines Anstiegs der Gesamtenergieeffizienz. Dies ist beispielsweise in chemischen Verbundanlagen möglich, was das Verwerfen solcher Abwärmeströme oder das Ableiten derartiger Wärmeströme in die Umwelt oder an Kühltürme vermeidet. Darüber hinaus kann zudem die elektrische Mindestlast von bestehenden Kraftwerken flexibel in Abhängigkeit von der Bereitstellung von Elektrizität oder Strom aus erneuerbaren Energiequellen oder von aktuell herrschenden Marktpreisen gesenkt werden, wobei der gleiche Wärmeausstoß erhalten bleibt.

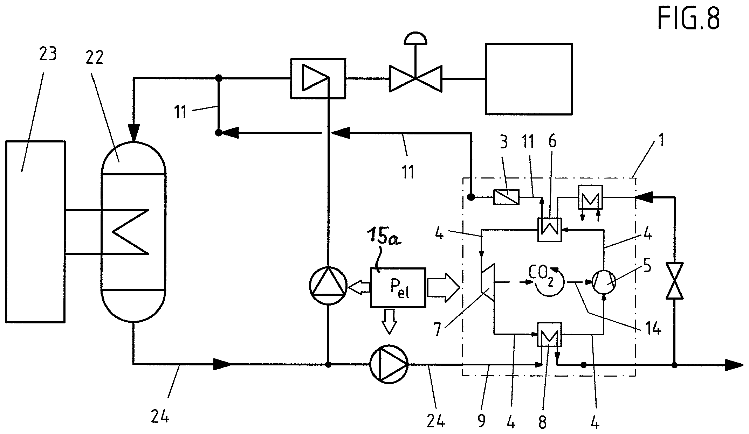

Insbesondere können das erfindungsgemäße Dampferzeugungssystem sowie das erfindungsgemäße Verfahren zur Dampferzeugung in Kombination mit einem Heißwasserwärmespeicher oder in Kombination mit einem Ruths-Dampfspeicher genutzt werden sowie in Geothermie-Netze und Fernwärmenetze mit dezentraler Dampfnutzung implementiert werden, von wo aus der jeweilige warme Fluidstrom 9 bereitgestellt wird.
Eine vorteilhafte Implementierung besteht auch darin, das erfindungsgemäße Dampferzeugungssystem 17 und das erfindungsgemäße Verfahren zur Dampferzeugung mit einem Reboiler 22 einer Chemieanlage zur Wärmerückgewinnung von Kondensaten zu nutzen. Eine solche Anwendung ist in der Fig. 8 dargestellt. In dem Reboiler 22 wird von zugeführtem Sattdampf 11 mit höherem Druck Wärmeenergie an ein Fluid eines beheizten Reaktors 23 abgegeben. Aus dem Sattdampf 11 bildet sich in dem Reboiler 22 Kondensat, das dann über eine Leitung 24 als Fluidstrom 9 der Hochtemperaturwärmepumpe 1 zugeführt wird. Hier wird auf die vorstehend beschriebene Weise unter Verwendung eines Überhitzers 3 Sattdampf 11 erzeugt, der dann wiederum dem Reboiler 22 zugeführt wird. Der Kondensatrücklauf bildet also eine nutzbare Wärmequelle in Anlagen der Chemieindustrie und der Geothermie.

Mit dem erfindungsgemäßen Dampferzeugungssystem 17 und dem erfindungsgemäßen Verfahren zur Dampferzeugung lässt sich also Prozessdampf aus Fernwärme und Strom, hier beispielsweise auch Strom aus erneuerbarer Energie, erzeugen. Ebenso ist es möglich, Prozessdampf aus industrieller Abwärme, die z.B. in Chemieprozessen oder in Stahlwerkprozessen entsteht, zu erzeugen. Im Fernwärmenetz, beispielsweise im Fernwärmenetz des Ruhrgebietes, können das erfindungsgemäße Dampferzeugungssystem 17 und das erfindungsgemäße Verfahren zur Dampferzeugung zur Dampferzeugung in der mittelständischen Industrie (beispielsweise für Joghurtfabriken, Krankenhäuser) Verwendung finden.

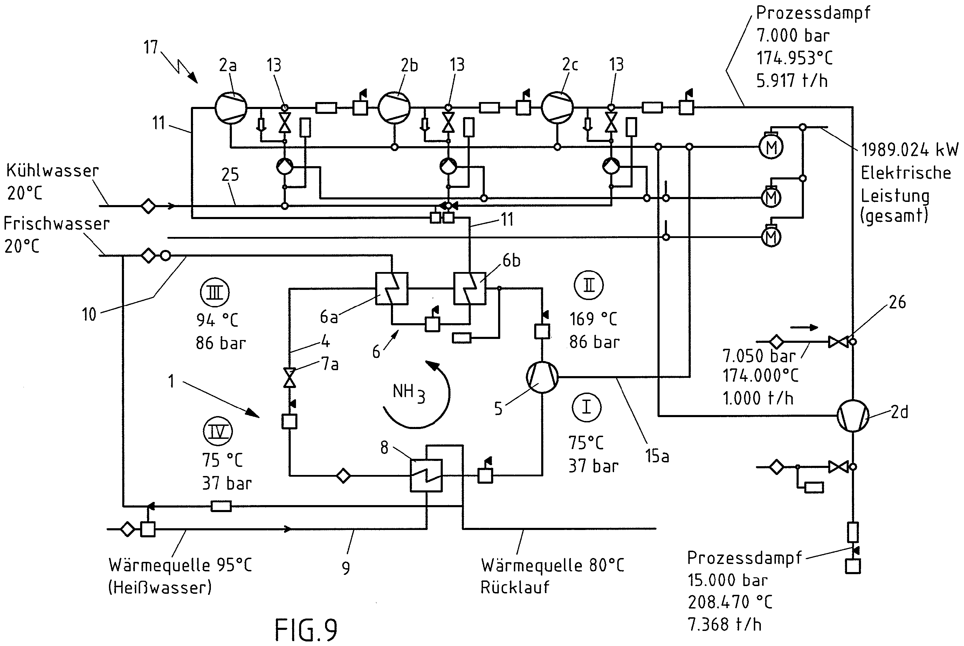

Auch wenn die bisherigen Ausführungsbeispiele auf CO₂ als Wärmeträgerfluid des Wärmeträgerfluidkreislaufs 4 abstellen, kann auch Ammoniak (NH₃) Verwendung finden, wobei dann aber anstelle des Expanders 7 eine Drossel 7a (oder ein Schraubenexpander) im Wärmeträgerfluidkreislauf angeordnet ist, wie dies der Fig. 9 zu entnehmen ist.
Ein solches Beispiel ist in der Fig. 9 dargestellt. Als Wärmequellen können hier die gleichen Wärmequellen verwendet werden, wie sie vorstehend im Zusammenhang mit den Ausführungsbeispielen nach den Fig. 1 bis 8 erläutert sind. Ebenso sind die dort erläuterten Kombinationen oder Verwendungen auch nach der Ausführungsform nach der Fig. 9 möglich.

Das Ausführungsbeispiel nach der Fig. 9 unterscheidet sich zunächst einmal darin, dass hier ein Ammoniakreislauf dargestellt ist, bei welchem mittels des in dem Wärmeträgerfluidkreislauf 4 angeordneten Kompressors 5 Ammoniak auf einen Druck von ≥ 80 bar und eine Temperatur von ≥ 160 °C verdichtet und erwärmt wird. Dieses Ammoniak-Wärmeträgerfluid wird dann der Wärmeenergieausspeisevorrichtung 6 zugeführt, die aus zwei Wärmetauschern 6a, 6b besteht, in welchen zugeführtes Wasser 10 zu Frischdampf 11 verdampft wird. In Strömungsrichtung nach der Wärmeenergieausspeisevorrichtung 6 weist das Wärmeträgerfluid eine Temperatur von 94 °C bei einem Druck von 86 bar auf, welchen Druck das Wärmeträgerfluid auch bereits eingangsseitig der Wärmeenergieausspeisevorrichtung aufweist. Danach durchströmt das Wärmeträgerfluid eine Drossel 7a oder stattdessen einen nicht dargestellten Schraubenexpander und wird auf einen Druck von 37 bar bei 75 °C entspannt. Dieses Wärmeträgerfluid fließt dann der Wärmeenergieeinspeisevorrichtung 8 zu, in welcher es durch Wärmeübertragung von einer Wärmequelle (warmer Fluidstrom 9) geringfügig Wärme aufnimmt, aber nach Durchströmen der Wärmeenergieeinspeisevorrichtung immer noch im Wesentlichen um die 75 °C bei einem Druck von 37 bar aufweist. Der zufließende warme Fluidstrom 9 (Wärmequelle), beispielsweise heißes Wasser, strömt der Wärmeenergieeinspeisevorrichtung in dem Ausführungsbeispiel mit einer Temperatur von 95 °C zu und verlässt diese mit einer Temperatur von 80 °C.

Der in der Wärmeenergieausspeisevorrichtung 6 gebildete Dampf wird danach einem mehrstufigen Dampfkompressor 2a - 2d zugeführt, wobei der Dampf 11 in den ersten drei Stufen 2a - 2c zu einem Prozessdampf von 7 bar und einer Temperatur von 175 °C verdichtet wird. Zwischen den einzelnen Verdichter- oder Kompressorstufen ist jeweils eine Einspritzkühlung mittels zugeführtem Einspritzwasser 25 angeordnet. Dieser Prozessdampf wird dann stromabwärts der Kompressionsstufe 2c einer weiteren Kompressionsstufe 2d zugeleitet, wobei ihm allerdings auf diesem Wege von der Kompressionsstufe 2c zu der Kompressionsstufe 2d über eine Zusatzdampfeinspeisung 26 Dampf mit einem Druck von 7 bar und einer Temperatur von 174 °C zugeführt wird. Dieser gemischte Prozessdampf wird dann in der letzten Kompressionsstufe 2d zu einem Prozessdampf von 15 bar und einer Temperatur von 208 °C verdichtet und komprimiert.

Bei allen Ausführungsbeispielen ist es ferner möglich, dass Dampferzeugungssystem 17 und die jeweilige Hochtemperaturwärmepumpe 1 dadurch in den Wasser/Dampfkreislauf eines zugeordneten Dampfkraftwerkes einzubinden, dass aus dem Wasser/Dampfkreislauf des zugeordneten Dampfkraftwerkes stammendes Speisewasser dem Dampferzeugungssystem 17 als Wasser 10 zugeführt wird.

## Patentansprüche

1. Dampferzeugungssystem (17) umfassend eine Hochtemperaturwärmepumpe (1) mit einem Wärmeträgerfluidkreislauf (4), in welchem eine Wärmeenergie in das Wärmeträgerfluid des Wärmeträgerfluidkreislaufs (4) einkoppelnde Wärmeenergieeinspeisevorrichtung (8) und eine Wärmeenergie aus dem Wärmeträgerfluid des Wärmeträgerfluidkreislaufs (4) auskoppelnde Wärmeenergieausspeisevorrichtung (6) sowie ein Kompressor (5) oder Verdichter und ein Expander (7) oder eine Entspannungsturbine oder eine Drossel (7a) oder ein Schraubenexpander angeordnet sind, wobei in der Wärmeenergieeinspeisevorrichtung (8) aus einem zuströmenden temperierten Fluidstrom (9) ausgekoppelte und an das Wärmeträgerfluid des Wärmeträgerfluidkreislaufs (4) übertragene Wärmeenergie das Wärmeträgerfluid erwärmt und der Kompressor (5) oder Verdichter dieses erwärmte Wärmeträgerfluid vor dessen Eintritt in die Wärmeenergieausspeisevorrichtung (6) auf einen solchen Druck verdichtet, dass dessen in der Wärmeenergieausspeisevorrichtung (6) aus dem Wärmeträgerfluid ausgekoppelte und an die Wärmeenergieausspeisevorrichtung (6) durchströmendes Wasser (10), insbesondere Speisewasser, übertragene Wärmeenergie das Wasser (10), insbesondere Speisewasser, verdampft, wobei der Wärmeenergieausspeisevorrichtung (6) in Strömungsrichtung des erzeugten Dampfes (11) mindestens ein den Dampfdruck erhöhender Dampfkompressor (2; 2a, 2b; 2a-2d) nachgeschaltet ist, **dadurch gekennzeichnet, dass** der Kompressor (5) oder Verdichter des Wärmeträgerfluidkreislaufs (4), der oder die oder mindestens ein Teil der den Dampfdruck des erzeugten Dampfes (11) erhöhende(n) Kompressor(en) (2, 2a, 2b) und der Expander (7) des Wärmeträgerfluidkreislaufs (4) auf einem Getriebe (21) angeordnet sind.

2. Dampferzeugungssystem (17) nach Anspruch 1, wobei das Getriebe (21) als Bull-Gear-Getriebe ausgebildet ist und vorzugsweise von einem einzigen Motor (20) angetrieben wird.

3. Dampferzeugungssystem (17) nach Anspruch 1 oder 2, wobei der Wärmeenergieausspeisevorrichtung (6) in Strömungsrichtung des erzeugten Dampfes (11) ein, insbesondere elektrisch betriebener Überhitzer (3), nachgeschaltet ist.

4. Dampferzeugungssystem (17) nach Anspruch 3, wobei der Überhitzer (3) in Strömungsrichtung des erzeugten Dampfes (11) dem mindestens einen Dampfkompressor (2; 2a, 2b; 2a-2d) nachgeschaltet ist.

5. Dampferzeugungssystem (17) nach einem der vorhergehenden Ansprüche, wobei der mindestens eine Dampfkompressor (2) eine mehrstufige Kompression (2a, 2b; 2a-2d) des Dampfes (11), insbesondere mit Zwischenkühlung (13), vorzugsweise mit Einspritzkühlung, aufweist.

6. Dampferzeugungssystem (17) nach einem der vorhergehenden Ansprüche, wobei das Wärmeträgerfluid des Wärmeträgerfluidkreislaufs (4) Kohlendioxid (CO₂) oder Ammoniak (NH₃) ist.

7. Dampferzeugungssystem (17) nach einem der vorhergehenden Ansprüche, wobei die Wärmeenergieeinspeisevorrichtung (8) als Wärmetauscher, insbesondere als flüssig/Gas- Wärmetauscher, und/oder die Wärmeenergieausspeisevorrichtung (6) als Wärmetauscher, insbesondere als Verdampfer/Gaskühler, ausgebildet sind.

8. Verfahren zur Dampferzeugung mit einem Dampferzeugungssystem (17), das eine Hochtemperaturwärmepumpe (1) mit einem Wärmeträgerfluidkreislauf (4), in welchem eine Wärmeenergie in das Wärmeträgerfluid des Wärmeträgerfluidkreislaufs (4) einkoppelnde Wärmeenergieeinspeisevorrichtung (8) und eine Wärmeenergie aus dem Wärmeträgerfluid des Wärmeträgerfluidkreislaufs (4) auskoppelnde Wärmeenergieausspeisevorrichtung (6) sowie ein Kompressor (5) oder Verdichter und ein Expander (7) oder eine Entspannungsturbine oder eine Drossel (7a) oder ein Schraubenexpander angeordnet sind, umfasst, wobei in der Wärmeenergieeinspeisevorrichtung (8) aus einem zuströmenden temperierten Fluidstrom (9) Wärmeenergie ausgekoppelt und das Wärmeträgerfluid des Wärmeträgerfluidkreislaufs (4) erwärmend an dieses übertragen wird und dieses erwärmte Wärmeträgerfluid vor dessen Eintritt in die Wärmeenergieausspeisevorrichtung (8) von dem Kompressor (5) oder Verdichter auf einen solchen Druck verdichtet wird, dass der Wärmeenergieinhalt des Wärmeträgerfluids ausreicht, um mit in der Wärmeenergieausspeisevorrichtung (6) aus dem Wärmeträgerfluid ausgekoppelter und an die Wärmeenergieausspeisevorrichtung (6) durchströmendes Wasser (10), insbesondere Speisewasser, übertragener Wärmeenergie das Wasser (10), insbesondere Speisewasser, zu verdampfen, wobei der in der Wärmeenergieausspeisevorrichtung (6) erzeugte Dampf (11) mindestens einem den Dampfdruck erhöhenden Dampfkompressor (2; 2a, 2b; 2a-2d) zugeführt wird, der der Wärmeenergieausspeisevorrichtung (6) in Dampfströmungsrichtung nachgeschaltet ist, **dadurch gekennzeichnet, dass** der Kompressor (5) oder Verdichter des Wärmeträgerfluidkreislaufs (4), der oder die oder mindestens ein Teil der den Dampfdruck des erzeugten Dampfes (11) erhöhende(n) Kompressor(en) (2, 2a, 2b) und der Expander (7) des Wärmeträgerfluidkreislaufs (4) von einem Getriebe (21) angetrieben werden.

9. Verfahren nach Anspruch 8, wobei das Wärmeträgerfluid Kohlendioxid (CO₂) ist und vor seinem Eintritt in die Wärmeenergieausspeisevorrichtung (6) auf einen Druck von ≥ 190 bar und eine Temperatur von ≥ 190 °C verdichtet wird.

10. Verfahren nach Anspruch 8, wobei das Wärmeträgerfluid Ammoniak (NH₃) ist und vor seinem Eintritt in die Wärmeenergieausspeisevorrichtung (6) auf einen Druck von ≥ 80 bar und eine Temperatur von ≥ 160 °C verdichtet wird.

11. Verfahren nach einem der Ansprüche 8 - 10, wobei der in der Wärmeenergieausspeisevorrichtung (6) erzeugte Dampf (11) einem, insbesondere elektrisch betriebenen, Überhitzer (3) zugeführt wird, der der Wärmeenergieausspeisevorrichtung (6) in Dampfströmungsrichtung nachgeschaltet ist.

12. Verfahren nach Anspruch 11, wobei der in der Wärmeenergieausspeisevorrichtung (6) erzeugte Dampf (11) in dem Überhitzer (3) auf einen Druck zwischen 1 und 5 bar gebracht wird und/oder dass der in der Wärmeenergieausspeisevorrichtung (6) erzeugte Dampf (11) in dem oder den den Dampfdruck erhöhenden Dampfkompressor(en) (2; 2a, 2b; 2a-2d) auf einen Druck zwischen 2 und 20 bar gebracht wird.

## Claims

1. A steam generating system (17) comprising a high-temperature heat pump (1) with a heat transfer fluid circuit (4), in which a thermal energy feed device (8) coupling thermal energy into the heat transfer fluid of the heat transfer fluid circuit (4) and a thermal energy discharge device (6) decoupling thermal energy from the heat transfer fluid of the heat transfer fluid circuit (4) as well as a compressor (5) or supercharger and an expander (7) or an expansion turbine or a throttle (7a) or a screw expander are arranged, wherein, in the thermal energy feed device (8), thermal energy decoupled from an inflowing tempered fluid flow (9) and transferred to the heat transfer fluid of the heat transfer fluid circuit (4) heats the heat transfer fluid, and the compressor (5) or supercharger compresses this heated heat transfer fluid to such a pressure before its entry into the thermal energy discharge device (6), that its thermal energy, decoupled from the heat transfer fluid in the thermal energy discharge device (6) and transferred to water (10), in particular feed water, flowing through the thermal energy discharge device (6), evaporates the water (10), in particular feed water, wherein at least one steam compressor (2; 2a, 2b; 2a-2d) increasing the steam pressure is connected downstream of the thermal energy discharge device (6) in the direction of flow of the generated steam (11), **characterized in that** the compressor (5) or supercharger of the heat transfer fluid circuit (4), the compressor or compressors or at least a part thereof (2, 2a, 2b) increasing the steam pressure of the generated steam (11) and the expander (7) of the heat transfer fluid circuit (4) are arranged on a transmission (21).

2. Steam generating system (17) according to claim 1, wherein the transmission (21) is configured as a bull gear transmission and is preferably driven by a single motor (20).

3. Steam generating system (17) according to claim 1 or 2, wherein a superheater (3), in particular an electrically operated superheater (3), is connected downstream of the thermal energy discharge device (6) in the flow direction of the generated steam (11).

4. Steam generating system (17) according to claim 3, wherein the superheater (3) is connected downstream of the at least one steam compressor (2; 2a, 2b; 2a-2d) in the direction of flow of the generated steam (11).

5. Steam generating system (17) according to any one of the preceding claims, wherein the at least one steam compressor (2) has a multi-stage compression (2a, 2b; 2a-2d) of the steam (11), in particular with intercooling (13), preferably with injection cooling.

6. Steam generating system (17) according to any one of the preceding claims, wherein the heat transfer fluid of the heat transfer fluid circuit (4) is carbon dioxide (CO₂) or ammonia (NH₃) .

7. Steam generating system (17) according to any one of the preceding claims, wherein the thermal energy feed device (8) is configured as a heat exchanger, in particular as a liquid/gas heat exchanger, and/or the thermal energy discharge device (6) is configured as a heat exchanger, in particular as an evaporator/gas cooler.

8. A method for steam generation with a steam generating system (17) comprising a high-temperature heat pump (1) with a heat transfer fluid circuit (4), in which a thermal energy feed device (8) coupling thermal energy into the heat transfer fluid of the heat transfer fluid circuit (4) and a thermal energy discharge device (6) decoupling thermal energy from the heat transfer fluid of the heat transfer fluid circuit (4) as well as a compressor (5) or supercharger and an expander (7) or an expansion turbine or a throttle (7a) or a screw expander are arranged, wherein, in the thermal energy feed device (8), thermal energy is decoupled from an inflowing tempered fluid flow (9) and is transferred to the heat transfer fluid of the heat transfer fluid circuit (4) in a manner to heat the same, and this heated heat transfer fluid is compressed by the compressor (5) or supercharger to such a pressure before its entry into the thermal energy discharge device (8) that the thermal energy content of the heat transfer fluid is sufficient to evaporate the water (10), in particular feed water, with thermal energy decoupled from the heat transfer fluid in the thermal energy discharge device (6) and transferred to water (10), in particular feed water, flowing through the thermal energy discharge device (6), the steam (11) generated in the thermal energy discharge device (6) being fed to at least one steam compressor (2; 2a, 2b; 2a-2d) increasing the steam pressure, which is connected downstream of the thermal energy discharge device (6) in the steam flow direction, **characterized in that** the compressor (5) or supercharger of the heat transfer fluid circuit (4), the compressor or compressors (2, 2a, 2b) or at least a part thereof, increasing the steam pressure of the generated steam (11) and the expander (7) of the heat transfer fluid circuit (4) are driven by a transmission (21).

9. Method according to claim 8, wherein heat transfer fluid is carbon dioxide (CO₂) and is compressed to a pressure of ≥ 190 bar and a temperature of ≥ 190°C before entering the thermal energy discharge device (6).

10. Method according to claim 8, wherein the heat transfer fluid is ammonia (NH₃) and is compressed to a pressure of ≥ 80 bar and a temperature of ≥ 160°C before entering the thermal energy discharge device (6).

11. Method according to any one of claims 8 to 10, wherein the steam (11) generated in the thermal energy discharge device (6) is fed to a superheater (3), in particular an electrically operated superheater (3), which is connected downstream of the thermal energy discharge device (6) in the steam flow direction.

12. Method according to claim 11, wherein the steam (11) generated in thermal energy discharge device (6) is brought to a pressure of between 1 and 5 bar in the superheater (3) and/or that the steam (11) generated in the thermal energy discharge device (6) is brought to a pressure of between 2 and 20 bar in the steam compressor(s) (2; 2a, 2b; 2a-2d) increasing the steam pressure.

## Revendications

1. Système de génération de vapeur (17) comprenant une pompe à chaleur à haute température (1) avec un circuit de fluide caloporteur (4), dans lequel sont disposés un dispositif d'alimentation en énergie thermique (8) couplant de l'énergie thermique au fluide caloporteur du circuit de fluide caloporteur (4) et un dispositif de décharge d'énergie thermique (6) découplant de l'énergie thermique du fluide caloporteur du circuit de fluide caloporteur (4) ainsi qu'un compresseur (5) ou surpresseur et un expanseur (7) ou une turbine de détente ou un étranglement (7a) ou un expanseur à vis, dans lequel, dans le dispositif d'alimentation en énergie thermique (8), l'énergie thermique découplée d'un flux de fluide tempéré entrant (9) et transférée au fluide caloporteur du circuit de fluide caloporteur (4) chauffe le fluide caloporteur, et le compresseur (5) ou surpresseur comprime ce fluide caloporteur chauffé à une telle pression avant son entrée dans le dispositif de décharge d'énergie thermique (6), que son énergie thermique, découplée du fluide caloporteur dans le dispositif de décharge d'énergie thermique (6) et transférée à l'eau (10), en particulier à l'eau d'alimentation, qui s'écoule à travers le dispositif de décharge d'énergie thermique (6), fait s'évaporer l'eau (10), en particulier l'eau d'alimentation, dans lequel au moins un compresseur de vapeur (2 ; 2a, 2b ; 2a-2d) augmentant la pression de vapeur est monté en aval du dispositif de décharge d'énergie thermique (6) dans le sens d'écoulement de la vapeur générée (11), **caractérisé en ce que** le compresseur (5) ou surpresseur du circuit de fluide caloporteur (4), le ou les compresseurs (2, 2a, 2b) ou au moins une partie de ceux-ci augmentant la pression de vapeur de la vapeur générée (11) et l'expanseur (7) du circuit de fluide caloporteur (4) sont disposés sur une transmission (21).

2. Système de génération de vapeur (17) selon la revendication 1, dans lequel la transmission (21) est conçue comme un engrenage à couronne principale (*Bull Gear*) et est de préférence entraînée par un seul moteur (20).

3. Système de génération de vapeur (17) selon la revendication 1 ou 2, dans lequel un surchauffeur (3), en particulier un surchauffeur (3) fonctionnant électriquement, est monté en aval du dispositif de décharge d'énergie thermique (6) dans le sens d'écoulement de la vapeur (11) générée.

4. Système de génération de vapeur (17) selon la revendication 3, dans lequel le surchauffeur (3) est monté en aval dudit au moins un compresseur de vapeur (2 ; 2a, 2b ; 2a-2d) dans le sens d'écoulement de la vapeur (11) générée.

5. Système de génération de vapeur (17) selon l'une quelconque des revendications précédentes, dans lequel ledit au moins un compresseur de vapeur (2) présente une compression à plusieurs étages (2a, 2b ; 2a-2d) de la vapeur (11), en particulier avec refroidissement intermédiaire (13), de préférence avec refroidissement par injection.

6. Système de génération de vapeur (17) selon l'une quelconque des revendications précédentes, dans lequel le fluide caloporteur du circuit de fluide caloporteur (4) est le dioxyde de carbone (CO₂) ou l'ammoniac (NH₃) .

7. Système de génération de vapeur (17) selon l'une quelconque des revendications précédentes, dans lequel le dispositif d'alimentation en énergie thermique (8) est conçu comme un échangeur de chaleur, en particulier comme un échangeur de chaleur liquide/gaz, et/ou le dispositif de décharge d'énergie thermique (6) est conçu comme un échangeur de chaleur, en particulier comme un évaporateur/refroidisseur de gaz.

8. Procédé de génération de vapeur avec un système de génération de vapeur (17) comprenant une pompe à chaleur à haute température (1) avec un circuit de fluide caloporteur (4), dans lequel sont disposés un dispositif d'alimentation en énergie thermique (8) couplant de l'énergie thermique au fluide caloporteur du circuit de fluide caloporteur (4) et un dispositif de décharge d'énergie thermique (6) découplant de l'énergie thermique du fluide caloporteur du circuit de fluide caloporteur (4) ainsi qu'un compresseur (5) ou surpresseur et un expanseur (7) ou une turbine de détente ou un étranglement (7a) ou un expanseur à vis, dans lequel, dans le dispositif d'alimentation en énergie thermique (8), l'énergie thermique est découplée d'un flux de fluide tempéré entrant (9) et est transférée au fluide caloporteur du circuit de fluide caloporteur (4) de manière à chauffer celui-ci, et ce fluide caloporteur chauffé est comprimé par le compresseur (5) ou surpresseur à une telle pression avant son entrée dans le dispositif de décharge d'énergie thermique (8), que la teneur en énergie thermique du fluide caloporteur est suffisante pour évaporer l'eau (10), en particulier l'eau d'alimentation, avec de l'énergie thermique découplée du fluide caloporteur dans le dispositif de décharge d'énergie thermique (6) et transférée à l'eau (10), en particulier à l'eau d'alimentation, circulant à travers le dispositif de décharge d'énergie thermique (6), la vapeur (11) générée dans le dispositif de décharge d'énergie thermique (6) étant amenée à au moins un compresseur de vapeur (2 ; 2a, 2b ; 2a-2d) augmentant la pression de vapeur, qui est monté en aval du dispositif de décharge d'énergie thermique (6) dans le sens d'écoulement de la vapeur, **caractérisé en ce que** le compresseur (5) ou surpresseur du circuit de fluide caloporteur (4), le ou les compresseurs (2, 2a, 2b) ou au moins une partie de ceux-ci, augmentant la pression de la vapeur générée (11) et l'expanseur (7) du circuit de fluide caloporteur (4) sont entraînés par une transmission (21).

9. Procédé selon la revendication 8, dans lequel le fluide caloporteur est le dioxyde de carbone (CO₂) et est comprimé à une pression de ≥ 190 bars et à une température de ≥ 190°C avant d'entrer dans le dispositif de décharge d'énergie thermique (6).

10. Procédé selon la revendication 8, dans lequel le fluide caloporteur est l'ammoniac (NH₃) et est comprimé à une pression de ≥ 80 bars et à une température de ≥ 160°C avant d'entrer dans le dispositif de décharge d'énergie thermique (6) .

11. Procédé selon l'une quelconque des revendications 8 à 10, dans lequel la vapeur (11) générée dans le dispositif de décharge d'énergie thermique (6) est amenée à un surchauffeur (3), en particulier un surchauffeur (3) fonctionnant électriquement, qui est monté en aval du dispositif de décharge d'énergie thermique (6) dans le sens d'écoulement de la vapeur.

12. Procédé selon la revendication 11, dans lequel la vapeur (11) générée dans le dispositif de décharge d'énergie thermique (6) est amenée à une pression comprise entre 1 et 5 bars dans le surchauffeur (3) et/ou la vapeur (11) générée dans le dispositif de décharge d'énergie thermique (6) est amenée à une pression comprise entre 2 et 20 bars dans le ou les compresseurs de vapeur (2 ; 2a, 2b ; 2a-2d) augmentant la pression de vapeur.
